# EUROPEAN PATENT SPECIFICATION

(11) **EP 2 745 747 B1**
(45) Date of publication and mention of the grant of the patent: **31.10.2018**
(21) Application number: 13460076.6
(22) Date of filing: 18.11.2013
(51) Int. Cl.: A47J 27/20

(54) **Pressure ham cooker**
Druck-Schinkenkocher
Cuiseur de jambon à pression

(30) Priority: 18.12.2012 PL 12160012
(43) Date of publication of application: 25.06.2014
(73) Proprietor: BROWIN spolka z ograniczona odpowiedzialnoscia spolka komandytowa, 93-373 Lodz (PL)
(72) Inventor: Kwapisz, Piotr, 93-361 ?ód? (PL)
(74) Representative: Dziubinska, Joanna

(56) References cited:
- DE-U1-202007 017 849
- GB-A- 237 082
- US-A- 1 079 160
- US-A- 2 166 778

## Description

The subject of the utility model is a new and original pressure ham cooker intended for independent manufacture of cooked meats without the use of food preservatives.

There are known different kinds of devices for the preparation of cooked meats. From the description of the utility model No. W 90902 there is known a ham cooker of cylindrical shape, with fastenings, a clamping cover, a spring, and embossings. From the description of the invention No. P 275357 there is known a ham cooker that consists of a cylindrical body and a screwed bottom.
From the US patent no US2166778 there are known electric oven for preparation e.g. meat, which is connected to the current.
From the patent nr DE202007017849 there are known device which has double plate closing the opening in the device, two side grips fixed at the exterior edge of plates for taking the device out, spring which is fixed to the clamping plate. The upper part of the spring, on which the cover is placed, is ended with a broad, round and flat pad. The cover does not have any elements which would allow to press the spring in a precise and stable way. The cover is of different shape than the whole device, which may cause the relocation of the cover
From British patent no GB237082 there are known device which is closed by tightening up, and the lower part of the vessel is in a completely different shape than the upper part.
The essence of the solution consists in the fact that in the middle part of the cover closing the body and in the middle part of the clamping plate there is a nest with an through opening which allows inserting a thermometer into the opening to direct measurement of the temperature of the meat charge, and the clamping plate has openings in its top part for fixing the spring; wherein the body is closed by a cover has a shaped cylindrical embossing at the bottom, which stabilizes upper end of the spring, but lower end of the spring is located in identical shaped embossing at clamping plate, and the body has four grooves ideally fitted to tongues placed in the cover of the container, so as to enable the closing of the container

Both the cover (1) and the clamping plate (2) have identical shaped cylindrical embossings. Additionally, on the clamping plate (2) there are made fastenings (5) in the form of openings allowing to place/ fasten the spring (7) in a proper position.

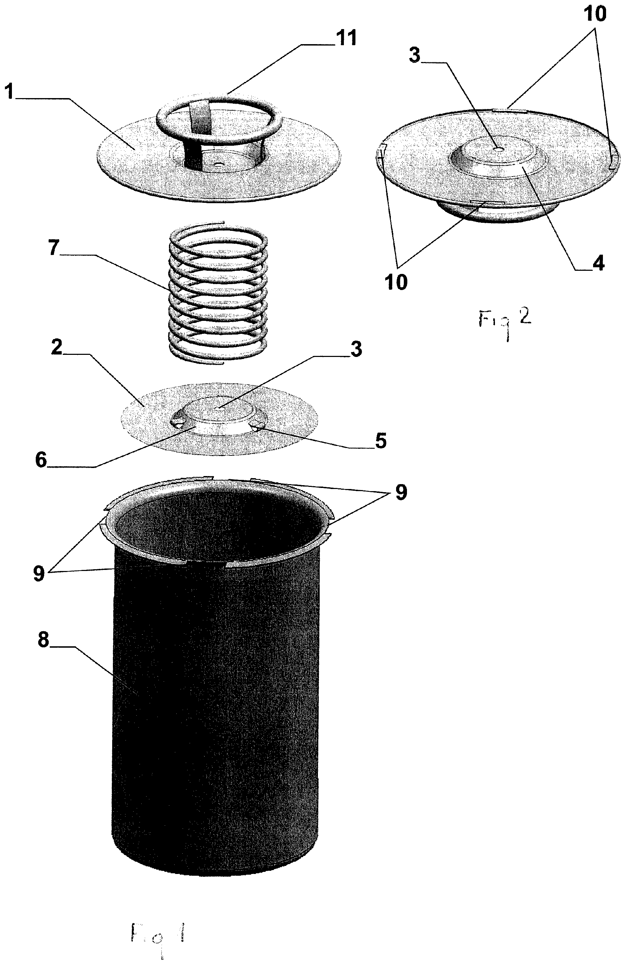

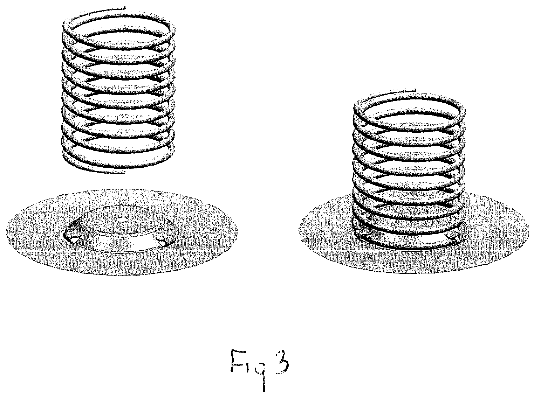

The subject of the utility model has been presented on the enclosed Figures 1 - 3, as follows:
- Fig. 1: - the dismantled pressure ham cooker
- Fig. 2: - the turned-over cover
- Fig. 3: - the clamping plate with and without a spring

According to the utility model, the pressure ham cooker consists of the body (8), where the meat is placed, and the top rims of the body (8) have four grooves (9) adjusted to tongues (10) placed in the cover (1) of the container. In the cover (1) and in the clamping plate (2) there appears a through opening (3); and the cover (1) has a shaped embossing (4), and the clamping plate (2) has openings (5) for fixing the spring (7) and a shaped cylindrical embossing (6) in its top part.

In the middle of the cover (1) and the clamping plate (2) there is a nest with an opening (3) enabling direct measurement of the temperature of the meat charge. The measurement is made by means of a thermometer with a probe, which is not an element of the kit. The cover (1) has a shaped cylindrical embossing (4) at the bottom, and the clamping plate (2) has an identical shaped embossing (6) at the top, which stabilizes the spring (7) and allows to place it with precision and prevent its relocation. Additionally, on the clamping plate (2) there are made openings (5) in the form of perforations, which allow to fix the spring (7) rigidly in a proper position. The cover (1) has a handle (11), which has been designed to hold a thermometer for measuring the temperature of the meat charge. The cover (1) and the clamping plate (2) have an opening (3) in their middle enabling the measurement of temperature of the meat charge by means of the thermometer probe. The handle (11) placed on the cover facilitates safe putting of the pressure ham cooker into and out of the water bath. The clamping plate (2) and the cover are shaped in such a way that the spring (7) is positioned in a precise way and does not move.

Moreover, the clamping plate (2) has openings (5) in its top part for fixing the spring (7). These are through openings and they enable the placing of the spring (7). The cover (1) and the clamping plate (2) have embossings necessary for precise placing of the spring (7) and preventing of its movements. The spring (7) has ground endings, facilitating its assembly and disassembly on the clamping plate (2). The spring (7) is fixed to the clamping plate (2) by slipping the spring into the openings (5). Such a method of fixing allows easy disassembly by pulling the spring (7) out of the openings (5). It also facilitates placing and taking out of the plate with the meat charge from the pressure ham cooker. Simultaneously, the extreme coils of the spring are shaped and ground in such a way that they ideally adjust to the shaped embossings (4) and (6) of the clamping plate (2) and the cover (1).

The cover (1) and the clamping plate (2) of the pressure ham cooker are designed in such a way that they have identical cylindrical embossings (4) and (6), preventing the spring (7) from sliding down in the course of pressing the meat charge. The body (8) has four grooves (9) ideally fitted to tongues (10) placed in the cover (1) of the container, so as to enable the closing of the container and to press the plate by means of the spring (7). The bent ending of one cutting in the vessel offers resistance for the cover to secure safe placing of the cover on the container.

An example of the realization:
The meat should be put into the body (8), and the clamping plate (2) should be put onto the meat. The clamping plate (2) should be placed with shaped cylindrical embossings (6) up. The spring (7) should be placed on shaped cylindrical embossings (6) of the clamping plate (2). The whole is to be covered with a cover (1).

## Claims

1. The pressure ham cooker of a cylindrical shape, with fastenings, the cover, the clamping plate, the spring, embossings, wherein in the middle part of the cover (1) closing the body (8) and in the middle part of the clamping plate (2) there is a nest with an through opening (3) which allows inserting a thermometer into the opening to direct measurement of the temperature of the meat charge, and the clamping plate (2) has openings (5) in its top part for fixing the spring (7); wherein the body (8) is closed by a cover (1) has a shaped cylindrical embossing (4) at the bottom, which stabilizes upper end of the spring (7), but lower end of the spring (7) is located in identical shaped embossing (6) at clamping plate (2), and the body (8) has four grooves (9) ideally fitted to tongues (10) placed in the cover (1) of the container, so as to enable the closing of the container

## Patentansprüche

1. Der Schinken-Kochtopf von zylindrischer Form hat Haken, Deckel, Druckplatte, Feder, Umformungen; er charakterisiert sich dadurch, dass sich in der Mitte des das Gehäuse (8) schließenden Deckels (1) und in der Mitte der Druckplatte (2) ein Loch (3) für das Thermometer zur direkten Temperaturmessung der Fleischeinlage befindet; die Druckplatte (2) besitzt im oberen Teil Öffnungen (5) zum Fixieren der Feder (7); das Gehäuse (8) wird mittels Deckels (1) geschlossen, der unten zylindrische Umformung (4) besitzt; diese stabilisiert das obere Ende der Feder (7); das untere Ende der Feder (7) befindet sich in identischer Umformung (6) in der Druckplatte (2); das Gehäuse (8) besitzt vier Einlässe (9), die an die Vorstöße (10) am Deckel (1) des Behälters genau angepasst sind, so dass das Schließen des Behälters möglich ist.

## Revendications

1. CHAUFFE-JAMBON - le dispositif pour la préparation de viande - possède la forme du cylindre, les crans, le couvercle, la plaque de serrage, le ressort, les formages, se caractérise du fait que dans la partie du milieu de couvercle (1) qui ferme le corps (8) et dans la partie du milieu de la plaque de serrage (2) se trouve le logement (3) dans la forme de l'ouverture transit qui permet de mettre dans l'ouverture un thermomètre pour la mesure directe de la viande, et la plaque de serrage (2) possède dans sa partie supérieure de l'ouverture (5) à fixer le ressort (7), par contre la partie inférieure du ressort (7) est située dans l'emboutissage identique profilé (6) se trouvant dans la plaque de serrage (2), et le corps (8) possède les quatre clavettes(9) ajustées parfaitement aux clavettes (10) situées dans le couvercle (1) du récipient en permettant la fermeture du récipient.
